# EUROPEAN PATENT SPECIFICATION

(11) **EP 3 217 058 B1**
(45) Date of publication and mention of the grant of the patent: **22.08.2018**
(21) Application number: 17159940.0
(22) Date of filing: 08.03.2017
(51) Int. Cl.: F16L 19/08, F16L 19/12

(54) **SCREW FITTING FOR CONNECTING A THREADED END MEMBER AND A HYDRAULIC OR GAS PIPE WITH A SMOOTH SURFACE**
SCHRAUBVERBINDUNG ZUM VERBINDEN EINES GEWINDEENDELEMENTS UND EINES HYDRAULIK- ODER EINES GASROHRS MIT EINER GLATTEN OBERFLÄCHE
RACCORD À VIS POUR RELIER UN ÉLÉMENT D'EXTRÉMITÉ FILETÉ ET UNE CONDUITE DE GAZ OU HYDRAULIQUE AYANT UNE SURFACE LISSE

(30) Priority: 10.03.2016 IT UA20161527
(43) Date of publication of application: 13.09.2017
(73) Proprietor: Tapel di Mastromatteo Ciro & C. S.a.s, 36043 Camisano Vicentino (IT)
(72) Inventor: MASTROMATTEO, Ciro, 36043 Camisano Vicentino (VI) (IT)
(74) Representative: Autuori, Angelo

(56) References cited:
- EP-A2- 1 939 511
- FR-A- 732 901
- US-A- 3 291 510
- US-A- 3 441 297
- US-A- 4 676 533
- US-A1- 2005 035 594

## Description

### Field of the Invention

The present invention is generally applicable to the technical field of fitting for pipes, and particularly relates to a screw fitting for reciprocally connecting a threaded end member and a hydraulic or gas pipe with a smooth surface, the pipe being metallic, multilayer or made of semirigid plastic.

### Background of the Invention

As known, there are several types of fitting systems to connect a gas or hydraulic pipe with a smooth surface to a metal end member.

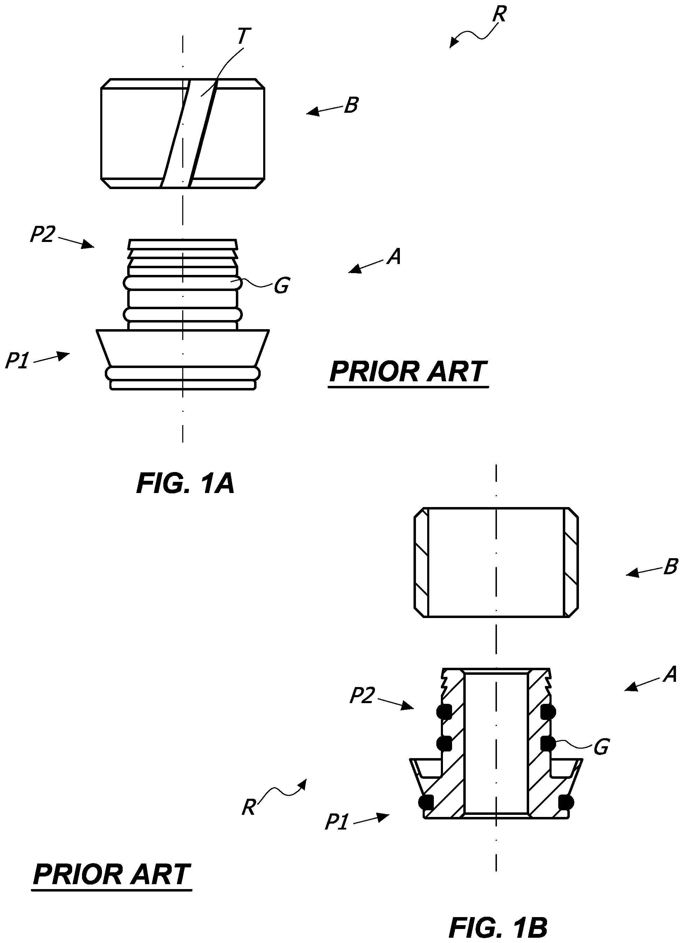

Particularly, as shown in FIGs. 1A and 1B, a fitting **R** is known which includes a metal tubular core **A** having a front portion **P1** coupled with the threaded end member and a rear portion **P2** insertable within the pipe. To ensure the hydraulic seal, some O-rings **G** are fitted over the metal core **A.**

To radially compress the pipe on the rear portion **P2** of the metal core **A,** a ring nut can be provided interacting with an elastic sleeve **B** having a transversal cut **T**, that it is made by milling.

The ring nut and the sleeve **B** have opposite conical surfaces reciprocally cooperating so as the screwing of the ring nut on the threaded end member corresponds to the radial compression of the sleeve **B** and, as a consequence, to the radial compression of the pipe on the rear portion **P2** of the metal core **A.**

The fitting of FIGs. 1A and 1B has some known drawbacks.

First of all, in order to screw the ring nut strong screwing forces have to be performed due to the opposite conical surfaces, that create a rather high fiction.

Furthermore, the rotation of the ring nut and the consequent radial compression of the sleeve **B** on the pipe tends to impress a rotational component thereto, that tends to make the pipe twisting with a consequent weakening of the mechanic structure thereof.

Furthermore, the milling through which the transversal cut **T** is made leaves on the sleeve **B** flashes and sharp edges that tend to cut the surface of the pipe and that externally create a friction with the opposite fustoconical surfaces, thus increasing the above mentioned drawbacks.

Moreover, these fittings have a poor mechanical grip.

To try to overcome this drawback, fittings have been provided which include an elastomeric seal for providing a local hydraulic seal and one or more toothed gripping rings susceptible to penetrate or engrave the surface of the pipe to provide the mechanical grip to the connector. If necessary, the elastomeric seal and the one or more toothed gripping rings can be integrally coupled to each other to form a connecting sleeve.

In one type of such fittings, the local mechanical grip is obtained by means of a ring nut which interacts with the toothed gripping ring by means of e.g. interaction between opposing conical surfaces so that the screwing of the ring nut onto the threaded end promotes the radial compression of the toothed gripping ring and thus the penetration of the teeth thereof through the outer surface of the pipe.

An example of such fittings, corresponding to the preamble of claim 1, is described in the European patent EP 1939511.

These types of fittings have some recognized drawbacks. First of all, also in this case due to the opposite conical surfaces the nut can be screwed only by exerting very substantial forces.

Moreover, also in this case the screwing of the ring nut tends to put the pipe in torsion.

Furthermore, such connections in case of need for maintenance, for example the need to change a worn elastomeric seal, do not allow access to internal components. Consequently, in this case it is necessary to replace the entire fitting, with consequent economic burden.

Also, in these known fittings the teeth of the toothed gripping ring normally have a low effectiveness of penetration and under the high force due to radial compression tend to bend, thus further reducing the effectiveness of the mechanical grip of the fitting.

From document US2005/035594 a system for connecting a metal cable-guide tubing for electric cables to an electrical junction box to be placed outdoor is known. In the light of the outdoor use of this connection system, it is watertight so as to prevent rain or moisture can penetrate inside the tubing thus causing damage to electrical cables.

From US3441297 a fitting is known having a ring nut, a gripping ring with longitudinal cuts and radial teeth, as well as an elastomeric seal.

### Summary of the Invention

Object of the present invention is to overcome at least partially the above mentioned drawbacks, by providing a high functional and low cost screw fitting for reciprocally connecting a threaded end member and a hydraulic or gas pipe with a smooth surface.

Another object is to provide a screw fitting that does not put in torsion the pipe during the screwing of the nut onto the threaded end.

Another object is to provide a screw fitting that limits or avoids damage to the pipe during the mutual junction with the threaded end.

Another object is to provide a screw fitting that allows easy maintenance and/or replacement of its parts.

Another object is to provide a screw fitting particularly simple to manufacture.

These objects, as well as other which will appear hereafter, are fulfilled by a fitting according to claim 1.

Advantageous embodiments are defined in accordance with the dependent claims.

### Brief description of the drawings

Further features and advantages of the invention will appear more evident reading the detailed description of some preferred not-exclusive embodiments of a fitting **1,** which are shown as a non-limiting example with the help of the annexed drawings, wherein:
**FIGS. 1A** and **1B** are respectively a lateral and a sectioned view of a fitting **R** of the prior art;
**FIG. 2** is a axially partial sectioned view of an embodiment of the fitting **10** in an operative step of starting screwing of the ring nut **20** onto the threaded end member **T** to mutually connect the latter and the pipe **P;**
**FIG. 3** is an exploded view of the assembly pipe **P** - fitting **10** - threaded end member **T** of FIG. 2;
**FIG. 4A** is a partially sectioned view of assembly pipe **P** - fitting **10** - threaded end member T of FIG. 2 in an operative step at the end of screwing;
**FIG. 4B** is an enlarged view of some details of FIG. 4A;
**FIG. 5** is a partially exploded sectional view of the embodiment of the fitting **10** of FIG. 2;
**FIG. 6** is another partially exploded sectional view of the embodiment of the fitting **10** of FIG. 2;
**FIGs. 7** and **8** are front views of the assembly pipe **P** - fitting **10** - threaded end
   member **T** of FIG. 2 in which the fitting **10** is sectioned according to the planes *VII* - *VII* and *VIII* - *VIII;*
**FIG. 9** is a top view of a toothed gripping ring **40;**
**FIG. 10** is an enlarged view of some details of FIG. 9;
**FIG. 11A** is a partially sectioned view of another embodiment of the fitting **10;**
**FIG. 11B** is an enlarged view of some details of FIG. 11A;
FIG. 12 is a partially exploded view of the assembly pipe **P** - fitting **10** of FIG. 11A.

### Detailed description of some preferred embodiments

With reference to the above figures, it is described a screw fitting **1** that can be used for the connection of a pipe **P** with a smooth surface and a threaded end member **T.**

In particular, the pipe **P** may be used for transporting any liquid or gas, e.g. water or methane gas, and may be made of any material, preferably metal, semirigid plastic or multilayer.

It is understood that the end member **T** may be of a type known *per se,* or may be the end portion of another pipe to be fitted.

In particular, the end member **T** may have a substantially cylindrical shape and, more particularly, may have a end portion **T1** susceptible to interact with the fitting.

The fitting **10** may comprise a ring nut **20** to be screwed onto the end portion **T1**. In particular, the ring nut **20** may have a substantially cylindrical shape and may define a longitudinal axis **X.**

In particular, the ring nut **20** may include an outer surface **21'** graspable by a user to screwing it onto the threaded end member **T** and an inner surface **21"** susceptible to be faced to the pipe **P.**

Suitably, the ring nut **20** may also include a rear portion **22** and a front portion **23.** The latter may have an inner surface **23"** which is counterthreaded with respect to the end portion **T1** of the end member **T** so that the ring nut **20** can be screwed onto the latter.

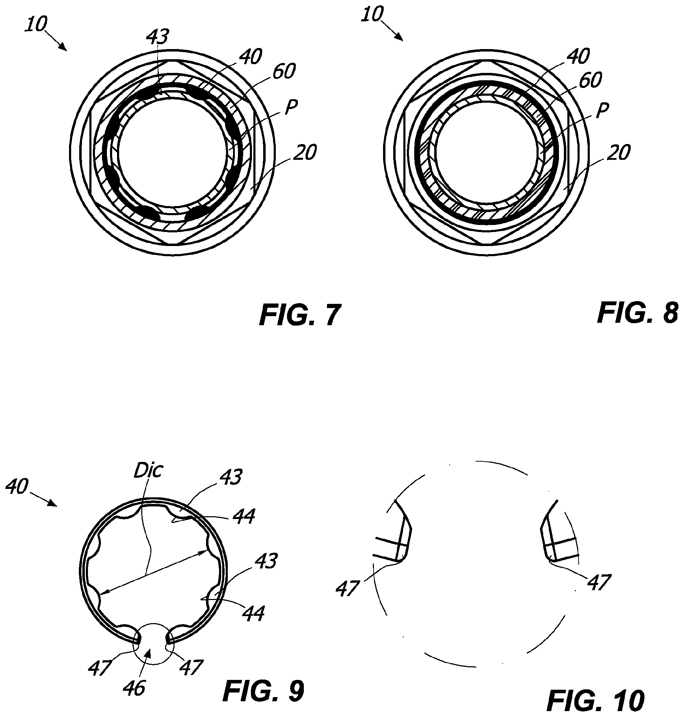

The fitting **10** may further include a toothed gripping ring **40,** shown in detail in FIGs. 9 and 10, comprising at least one first portion **41** having substantially cylindrical shape and substantially coaxial with the axis **X** and at least one second portion **42** comprising a plurality of teeth **43** radially extending towards the axis **X** in a plane substantially transverse to the same axis **X** to facing toward the pipe **P.** Preferably, the toothed gripping ring **40** may consist of the first portion **41** and a single second portion **42.**

Suitably, the toothed gripping ring **40,** and in particular the teeth **43,** may be made of a material having a hardness greater than the one of the material of which the surface **P1** of the pipe **P** is made. It is clear that in the case of a monolayer plastic or metal pipe the hardness of the surface of the pipe coincides with the one of the whole pipe.

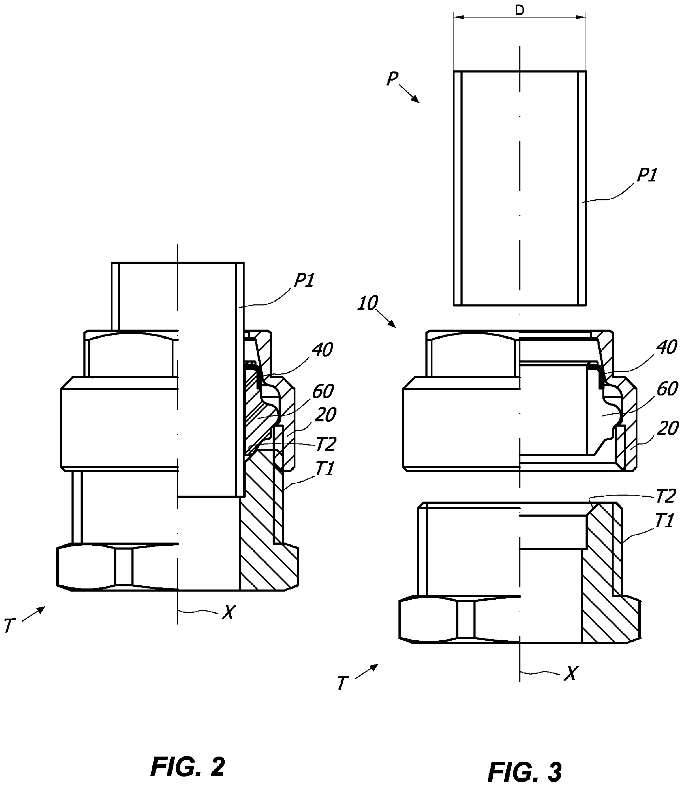

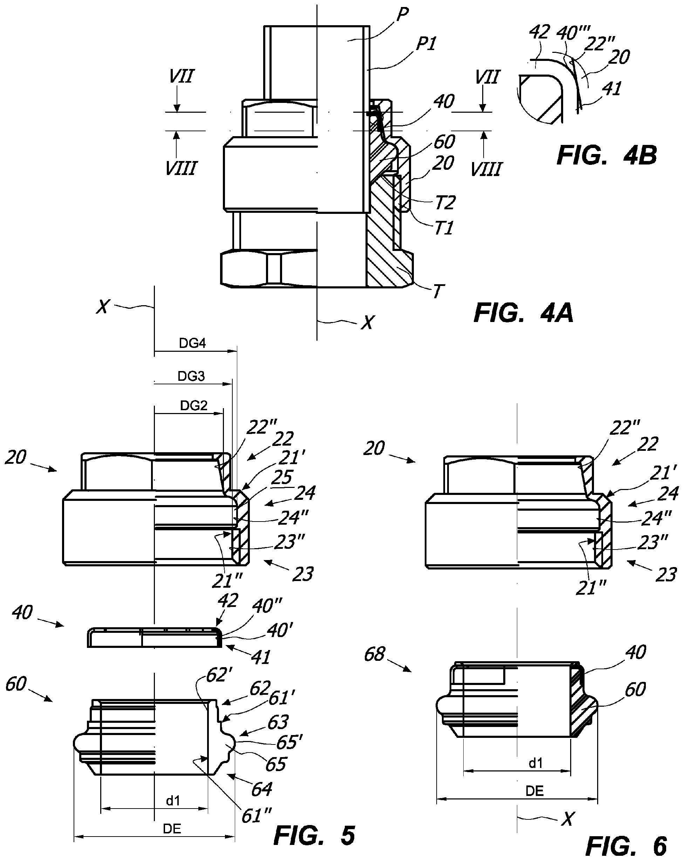

The teeth **43** may have one end **44** susceptible to pass from a start end-stroke position in which the end **44** is in contact with the outer surface **P1** of the pipe **P** (FIG. 2) and a final end-stroke position (FIG. 4A) in which the end **44** penetrates through the surface **P1** of the pipe **P.**

Suitably, each of the teeth **43** may have a shape such that the end **44** of the same teeth **43** in the start end-stroke position is susceptible to interact with the outer surface **P1** of the pipe **P** in a substantially punctual area thereof, in order to maximize the local pressure thus facilitating the penetration of the teeth **43.**

For example, as more clearly shown in FIG. 9, the end **44** of the teeth **43** may have substantially convex shape, for example semi-circular or substantially triangular shape.

In this way, when the end **44** is in the start end-stroke position may be susceptible to interact with the outer surface **P1** of the pipe **P** in a very small area, corresponding to a single point of tangency. This further maximizes the local pressure on the same area, so as to facilitate penetration to ensure an optimal mechanical grip of the fitting **10.**

As better explained hereinafter, the end **44** moves from the start end-stroke position to the final end-stroke position by screwing the ring nut **20** onto the end member **T.**

In any case, the inner diameter **Dic** of the toothed gripping ring **40** may be substantially equal to or greater than the outside diameter **D** of the pipe **P,** so that the former **40** can be fitted over the latter **P.** It is understood that the inner diameter **Dic** of the toothed gripping ring **40** corresponds to the distance between the ends **44** of two mutually opposite teeth **43.**

It is understood that the characteristics of the toothed gripping ring **40,** for example the hardness of the material or the nature thereof, may vary depending on whether the pipe is made of, for example, polymeric or metallic material.

For example, the toothed gripping ring **40** may be made of metal, for example steel, or made of glass-fiber filled polyamide, preferably by injection molding.

According to another aspect, the toothed gripping ring **40** may have a longitudinal cut **46** so as to enable the same to be deformed in an elastic way as a result of the radial compression.

Advantageously, the toothed gripping ring **40** may be simple to manufacture, so as to be particularly cost-effective.

In particular, the toothed gripping ring **40** may be manufactured starting from a metal laminar foil having hardness greater than that of the pipe. The laminar foil is passed through a progressive stamping die and is subsequently stamped to define the profiles and the internal diameters of the teeth and to make the longitudinal cut, deep-drawn to give the shape to the ring **40** and bended at the edges of the longitudinal cutting to eliminate sharp edges.

According to a further aspect, the inner surface **21"** of the ring nut **20** may comprise at least one substantially zone **22"** outwardly diverging relatively to the axis **X.** In particular, the rear portion **22** of the ring nut **20** may have an inner surface which includes such diverging zone **22".** Moreover, the latter may be susceptible to interact with the toothed gripping ring **40,** in particular with a contact zone **40'"** of the outer surface **40'** of the latter.

In this way, the screwing of the ring nut **20** onto the threaded end member **T** radially compress the toothed gripping ring **40** so that the teeth **43** of the latter penetrates the surface **P1** of the pipe **P.**

Thanks to the above described features, it is possible to obtain a particularly effective mechanical grip of the fitting **10.**

Conveniently, as shown in FIG. 4B, the contact between the inner surface **22"** of the rear portion **22** of the ring nut **20** and the contact area **40'"** of the outer surface 40' of the toothed gripping ring **40** is made in an extremely small area, actually at a single point of tangency.

In this way, the ring nut **20** does not transfer the torque to the pipe upon the screwing of the same onto the threaded end member **T**, so as to avoid unwanted twists of the same pipe **P,** in particular in case of semi-rigid plastic or multilayer pipes.

The fitting **10** may also include an elastomeric seal **60,** of the type known *per se.* The latter may have an outer surface **61'** facing the inner surface **21"** of the ring nut **20.** The elastomeric seal **60** may also have an inner surface **61"** susceptible to come into contact with the outer surface **P1** of the pipe **P,** so to provide the local hydraulic seal.

If necessary, the elastomeric seal **60** may be interposed between the pipe **P** and the ring nut **20** so as to be radially constrained therebetween, and may be interposed between the end member **T** and the toothed gripping ring **40** so as to be axially constrained therebetween.

In particular, the end member **T** may include a front portion **T2** susceptible to be faced to the pipe **P.** More particularly, the elastomeric seal **60** may comprise a front portion **64** counter-shaped with respect to the front portion **T2** in such a way that following the screwing of the ring nut **20** onto the threaded end member T**,** the respective portions **64, T2** can come into mutual contact to provide a local hydraulic seal.

According to a further aspect, the elastomeric seal **60** may have different colors which may for example follow a code that identifies the type of fluid by which they are susceptible to come into contact.

For example, the elastomeric seal **60** may be black or yellow, which identifies the intended use thereof with drinking water or gas.

Conveniently, therefore, the seal **60** may have an inner diameter **d1** such that it can be tightly fitted over the pipe **P.**

Advantageously, the elastomeric seal **60,** subjected to radial compression by the cylindrical portion **41** of the toothed gripping ring **40,** may be made of a material having a hardness substantially less than the radial compressive strength of the pipe **P** so that it can be deformed on the latter during the screwing of the fitting **10** onto the end member **T** without deforming radially the same pipe.

The toothed gripping ring **40** occupies only a small part of the elastomeric seal **60.** Such a configuration allows, in case of need, to further screwing the ring nut **20** onto the threaded end member **T** to obtain an increase of the local hydraulic seal.

The elastomeric seal **60** may further be chosen so as to impart to the ends **44** of the teeth **43** a predetermined stroke, for example 0,2 - 0,3 millimeters.

By suitably selecting the mechanical characteristics of the elastomeric seal **60** it is therefore possible in the case of semi-rigid plastic or multilayer pipe to avoid the use of a metal core providing hydraulic seal internally to the pipe, as is the usual case with the prior art fittings.

Other apparent advantage of the fitting **1** of the present invention is its universality for all types of pipes, whether they are metallic, semi-rigid plastic or multilayer pipes. In fact, the prior art fittings are specific for a given type of pipe.

According to a further aspect, the ring nut **20** may also have a central portion **24** interposed between the front portion **23** and the rear one **22.** In particular, the central portion **24** may have a minimum internal diameter **DG4** substantially greater than the maximum inner diameter **DG2** of the rear portion **22** and the crest diameter **DG3** of the front portion **23** of the same ring nut **20.** In this way, the central portion **24** of the ring nut **20** may define a seat **25** for the elastomeric seal **60.**

Suitably, the elastomeric seal **60** may have an annular projection **65** designed to interact with the seat **25** so that the elastomeric seal **60** is constrained axially and blocked radially. More precisely, the elastomeric seal **60** is axially slidable between two end-stroke front and rear positions.

In particular, the maximum diameter **DE** of the central portion **63** of the elastomeric seal **60** may be substantially coincident with the inside diameter **DG4** of the central portion **24** of the ring nut **20** so that the outer surface **65'** of the annular projection **65** is in contact with the inner surface **24"** in correspondence of the seat **25.**

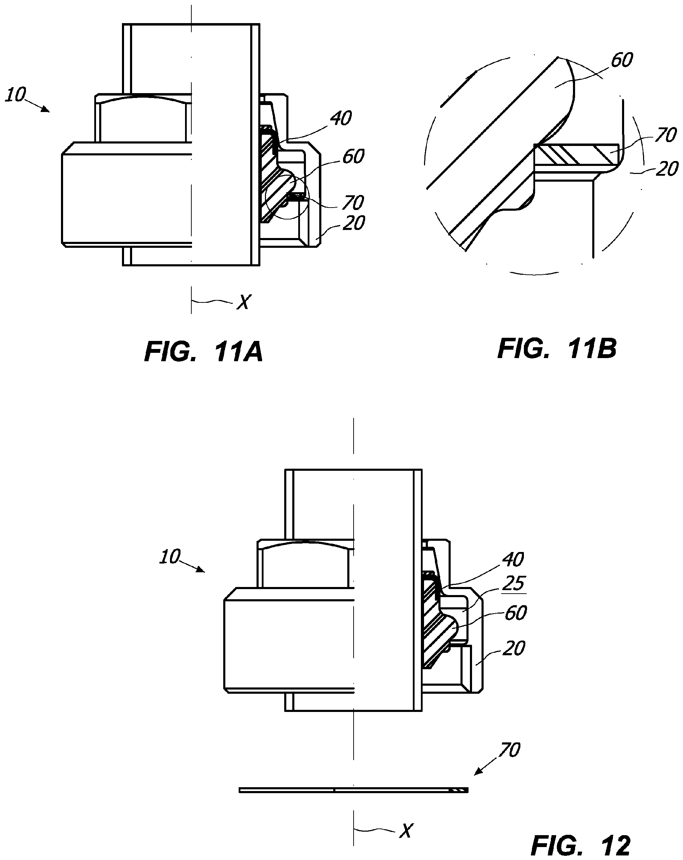

According to a different embodiment shown in FIGS. 11A, 11B and 12, the maximum diameter **DE** of the central portion **63** of the elastomeric seal **60** is less than the inner diameter **DG4** of the central portion **24** of the ring nut **20.**

Suitably, the fitting **10** may then comprise an annular spacer element **70** suscpetible to be interposed between the central portion **63** of the elastomeric seal **60** and the inner surface **24"** of the central portion **24** of the ring nut **20** in correspondence of the seat **25,** and in particular in mutual contact with the latter.

In any case, the elastomeric seal **60** may then be constrained within the ring nut **20** so that the former does not protrude from the latter, so as to define an unitary assembly easy to be handled by a user.

In order to accomplish the latter, it may be possible to elastically force the annular seal **60** into the seat **25** of the ring nut **20** acting on the annular projection **65** or to couple the annular seal **60** to the ring nut **20** by means of the annular spacer element **70.**

The elastomeric seal **60** may comprise a rear portion **62** having an outer surface **62'** in contact with the inner surface **40"** of the toothed gripping ring **40.**

In particular, as shown in FIG. 6, the elastomeric seal **60** and the toothed gripping ring **40** may be integral with each other, so as to define a unitary gripping gasket **68.**

Suitably, the screwing of the ring nut **20** onto the end member **T** radially compress the gripping gasket **68.** In particular, the elastomeric seal **60** is compressed, while the teeth **43** penetrates through the outer surface **P1** of the pipe **P.**

Possibly, the seal **60** and the toothed gripping ring **40** may be integrally coupled to each other, e.g. glued or co-molded, so as to obtain the gripping gasket **68** which can be subsequently inserted inside the ring nut **20** and / or over the pipe **P.** Suitably, the toothed gripping ring **40** may be embedded within the seal **60,** as shown in the annexed figures.

Compared to the resilient prior art gasket of FIG. 1A, the unitary gripping gasket **68** has a longer stroke when subjected to compression due to the softness of the elastomeric seal **60.**

The elastomeric seal **60** can be suitably shaped in such a way that the same once coupled with the toothed gripping ring **40** defines a gasket **68** having a substantially cylindrical shape which can have an inner diameter **d1** and a maximum outer diameter coincident with the outer diameter **DE** of the elastomeric seal **60.**

In the unitary gripping gasket **68** the elastomeric seal **60** can cooperate with the toothed gripping ring **40** so that the latter is deformed under the action of radial compression of the ring nut **20** in an elastic way. In practice, the mechanical characteristics of the elastomeric seal **60** defines the response of the toothed gripping ring **40** to the radial deformation.

According to a particular aspect, shown for example in FIG. 10, the end portions **47** of the toothed gripping ring **40** in correspondence of the longitudinal cut **46** may be curved, so as to preserve the ring nut **20** from grooves on its inner surface **22"** and/or the elastomeric seal **60** from notches, allowing the reuse thereof once the fitting **10** is unscrewed from the threaded end member **T.**

For example, the end portions **47** may be curved so as to project towards the axis **X.**

Operatively, the mounting of the fitting **10** may be accomplished by providing the ring nut **20** and by inserting into the latter the seal **60** and the toothed gripping ring **40.** The latter may be coupled to the ring nut **20** as described above, so as to define an assembly to be handled by an operator.

For mutually connecting the pipe **P** and the threaded end member **T** an operator first fits the fitting **10** over the pipe **P,** and then screws the ring nut **20** onto the threaded end member **T** so as to generate a radial compression on the seal **60** and on the toothed ring **40** to impart the local hydraulic seal and mechanical grip.

To partially or even completely remove the fitting **10** may be sufficient to unscrew the ring nut **20** and remove the toothed gripping ring **40** and the elastomeric seal **60,** which makes the screwing and/or the removal and/or the at least partially re-use of the fitting **10** particularly easy.

It is understood that if the fitting **10** includes the above described unitary gasket **68** these operations are even more simplified.

From the above, it is apparent that the invention achieves the intended objects.

The invention is susceptible to numerous modifications and variants all falling within the inventive concept expressed in the appended claims. All particulars may be replaced by other technically equivalent elements, and the materials may be different according to the needs, without exceeding the scope of the invention.

## Claims

1. A screw fitting for the reciprocal connection of a threaded end member (**T**) and a pipe (**P**) with smooth surface for transporting a gas or a liquid, comprising:
- a substantially tubular ring nut (**20**) defining an axis (**X**) having an outer surface (**21'**) susceptible to be grasped by an user to promote the screwing upon the threaded end member (**T**);
- a gripping ring (**40**);
- an elastomeric seal (**60**) having an inner surface (**61"**) susceptible to come into contact with the outer surface (**P1**) of the pipe (**P**) and an outer surface (**61'**) susceptible to come into contact with the threaded end member (**T**) to provide local hydraulic seal, said elastomeric seal (**60**) and said gripping ring (**40**) being integrally coupled so as to define a unitary gripping gasket (**68**);
wherein said ring nut (**20**) has a first rear portion (**22**) having an inner surface (**22"**) substantially outwardly diverging with respect to said axis (**X**) susceptible to interact with the outer surface (**40'**) of said gripping ring (**40**);
wherein upon the screwing of said ring nut (**20**) on the threaded end member (**T**) the axial translation of said inner surface (**22"**) of said first rear portion (**22**) of the same ring nut (**20**) promotes the radial compression of said gripping ring (**40**); wherein said gripping ring (**40**) has a plurality of teeth (**43**) extending in a plane substantially transverse to said axis (**X**) to penetrate within the outer surface (**P1**) of the pipe (**P**), said gripping ring (**40**) being a split ring having a longitudinal cut (**46**) so as to be elastically deformable, so that consequently to said radial compression said teeth (**43**) penetrate at least partially in the outer surface (**P1**) of the pipe (**P**) to provide the local mechanical grip;
**characterized in that** the outer surface (**40'**) of said gripping ring (**40**) is configured so that during the screwing of said ring nut (**20**) on the threaded end member (**T**) the former (**40'**) and said inner surface (**22"**) of said first rear portion (**22**) of said ring nut (**20**) come reciprocally into contact in a single point of tangency (**40'"**), so as to avoid unwanted twisting of the pipe (**P**).

2. Fitting according to claim 1, wherein said inner surface (**22"**) of the first rear portion (**22**) of said ring nut (**20**) is substantially frusto-conical, the outer surface (**40'**) of said gripping ring (**40**) having a rounded shape contact zone (**40"'**) with said inner surface (**22"**) of said ring nut (**20**), said contact zone (**40"'**) defining said single point of tangency.

3. Fitting according to the claim 1 or 2, wherein said unitary gripping gasket (**68**) is coupled with said ring nut (**20**) so that the latter define an unitary assembly to be handled by a user.

4. Fitting according to the claim 1, 2 or 3, wherein said elastomeric seal (**60**) has an annular projection (**65**), said ring nut (**20**) comprising a seat (**25**) for said annular projection (**65**) so as to allow an operator to elastically force said annular projection (**65**) within said seat (**25**) so as to obtain said unitary assembly.

5. Fitting according to claim 4, wherein said ring nut (**20**) has a second central portion (**24**) and a third threaded front portion (**23**), said second central portion (**24**) having a minimum internal diameter (**DG4**) substantially greater than the maximum internal diameter (**DG2**) of said first rear portion (**22**) and greater than the crest diameter (**DG3**) of said third threaded front portion (**23**) so as to define said seat (**25**).

6. Fitting according to claim 5, wherein the maximum diameter (**DE**) of said annular projection (**65**) of said elastomeric seal (**60**) is slightly higher than or substantially coincident with the maximum inner diameter (**DG4**) of said second central portion (**24**) of said ring nut (**20**) so that the outer surface (**65'**) of said annular projection (**65**) is in contact with said second central portion (**24**) to axially constrain and radially block said elastomeric seal (**60**) into said ring nut (**20**).

7. Fitting according to claim 5, wherein the maximum diameter (**DE**) of said annular projection (**65**) of said elastomeric seal (**60**) is substantially less than the maximum inner diameter (**DG4**) of said second central portion (**24**) of said ring nut (**20**), said fitting further including an annular spacer element (**70**) susceptible to be interposed between said first central portion (**63**) of said elastomeric seal (**60**) and said second central portion (**24**) of said ring nut (**20**), said annular spacer element (**70**) being in contact with said first central portion (**63**) and said second central portion (**24**) to axially constrain and radially block said elastomeric seal (**60**) into said ring nut (**20**).

8. Fitting according to one or more of the preceding claims, wherein said elastomeric seal (**60**) is made of an elastomeric material chosen in such a manner that it does not radially deform the pipe (**P**) upon the screwing of said ring nut (**20**).

9. Fitting according to one or more of the preceding claims, wherein each of said teeth (**43**) of said gripping ring (**40**) has one end (**44**) susceptible to move from a starting end-stroke position wherein it is in contact with the outer surface (**P1**) of the pipe (**P**) and a final end-stroke position wherein it is penetrated therein upon the screwing of said ring nut on the threaded end member (**T**).

10. Fitting according to the preceding claim, wherein each of said teeth (**43**) has a shape such that said end (**44**) in said starting end stroke position is susceptible to come into contact with the outer surface (**P1**) of the pipe (**P**) in an substantially punctual area thereof, so as to maximize the local pressure facilitating the penetration of said teeth (**43**).

11. Fitting according to the claim 9 or 10, wherein said elastomeric seal (**60**) has a shape such as and/or is made of a material such as to impart to said ends (**44**) of said teeth (**43**) a predetermined stroke.

12. Fitting according to one or more of the preceding claims, wherein the fitting is free of a inner metallic core to be inserted within the pipe.

13. Fitting according to one or more of the preceding claims, wherein said gripping ring (**40**) is embedded within said elastomeric seal (**60**).

14. Fitting according to one or more of the preceding claims, wherein the end member (**T**) includes a front portion (**T2**) susceptible to be faced to the ring nut (**20**), the outer surface (**61'**) of said elastomeric seal (**60**) comprising a front portion (**64**) at least partly counter-shaped with respect to the front portion (**T2**) of the end member (**T**) to come in contact therewith (**T2**) upon the screwing of the ring nut (**20**) onto the threaded end member (**T**) to provide the local hydraulic seal.

15. Fitting according to one or more of the preceding claims, wherein the toothed gripping ring (**40**) or the teeth (**43**) of said toothed gripping ring (**40**) are made of a material having a hardness greater than the one of the material of which the surface (**P1**) of the pipe (**P**) is made.

## Patentansprüche

1. Schraubverbindung für die wechselseitige Verbindung eines Gewindeendelements (T) und eines Rohrs (P) mit glatter Oberfläche zum Transportieren eines Gases oder einer Flüssigkeit, umfassend:
- einen im Wesentlichen rohrförmigen Gewindering (20), der eine Achse (X) definiert, mit einer Außenfläche (21') die von einem Benutzer ergriffen werden kann, um das Aufschrauben des Gewindeendelements (T) zu fördern;
- einen Greifring (40);
- eine Elastomerdichtung (60) mit einer Innenfläche (61"), die mit der Außenfläche (P1) des Rohrs (P) in Kontakt kommen kann, und einer Außenfläche (61'), die mit dem Gewindeendelement (T) in Kontakt kommen kann, um eine lokale hydraulische Dichtung bereitzustellen, wobei die Elastomerdichtung (60) und der Greifring (40) einstückig miteinander verbunden sind, um eine Greifdichtungseinheit (68) zu definieren;
wobei der Gewindering (20) einen ersten hinteren Abschnitt (22) mit einer Innenfläche (22") aufweist, die in Bezug auf die Achse (X) im Wesentlichen nach außen divergiert, die mit der Außenfläche (40') des Greifrings (40) wechselwirken kann;
wobei beim Aufschrauben des Gewinderings (20) auf das Gewindeendelement (T) die axiale Translation der Innenfläche (22") des ersten hinteren Abschnitts (22) dieses Gewinderings (20) die radiale Verdichtung des Greifrings (40) fördert;
wobei der Greifring (40) mehrere Zähne (43) aufweist, die sich in einer Ebene erstrecken, die im Wesentlichen quer zur Achse (X) verläuft, um in die Außenfläche (P1) des Rohrs (P) einzudringen, wobei der Greifring (40) ein Spaltring ist, der einen Längsschnitt (46) aufweist, damit er elastisch verformbar ist, so dass die Zähne (43) infolge der radialen Verdichtung mindestens teilweise in die Außenfläche (P1) des Rohrs (P) eindringen, um den lokalen mechanischen Halt bereitzustellen;
**dadurch gekennzeichnet, dass** die Außenfläche (40') des Greifrings (40) derart eingerichtet ist, dass während des Aufschraubens des Gewinderings (20) auf das Gewindeendelement (T) erstgenannte (40') und die Innenfläche (22") des ersten hinteren Abschnitts (22) des Gewinderings (20) an einem einzigen Berührungspunkt (40"') wechselseitig in Kontakt kommen, um unterwünschtes Verdrehen des Rohrs (P) zu verhindern.

2. Anschlussstück nach Anspruch 1, wobei die Innenfläche (22") des ersten hinteren Abschnitts (22) des Gewinderings (20) im Wesentlichen kegelstumpfförmig ist, wobei die Außenfläche (40') des Greifrings (40) eine abgerundet geformte Kontaktzone (40"') mit der Innenfläche (22") des Gewinderings (20) aufweist, wobei die Kontaktzone (40"') den einzigen Berührungspunkt definiert.

3. Anschlussstück nach Anspruch 1 oder 2, wobei die Greifdichtungseinheit (68) mit dem Gewindering (20) derart gekoppelt ist, dass dieser eine Montageeinheit definiert, die von einem Benutzer gehandhabt wird.

4. Anschlussstück nach Anspruch 1, 2 oder 3, wobei die Elastomerdichtung (60) einen ringförmigen Vorsprung (65) aufweist, wobei der Gewindering (20) eine Aufnahme (25) für den ringförmigen Vorsprung (65) umfasst, um es einem Bediener zu ermöglichen, den ringförmigen Vorsprung (65) elastisch in die Aufnahme (25) zu drücken, um die Montageeinheit zu erhalten.

5. Anschlussstück nach Anspruch 4, wobei der Gewindering (20) einen zweiten mittleren Abschnitt (24) und einen dritten vorderen Gewindeabschnitt (23) aufweist, wobei der zweite mittlere Abschnitt (24) einen minimalen Innendurchmesser (DG4) aufweist, der im Wesentlichen größer ist als der maximale Innendurchmesser (DG2) des ersten hinteren Abschnitts (22) und größer ist als der Kammdurchmesser (DG3) des dritten vorderen Gewindeabschnitts (23), um die Aufnahme (25) zu definieren.

6. Anschlussstück nach Anspruch 5, wobei der maximale Durchmesser (DE) des ringförmigen Vorsprungs (65) der Elastomerdichtung (60) etwas größer ist als der maximale Innendurchmesser (DG4) des zweiten mittleren Abschnitts (24) des Gewinderings (20) oder mit diesem im Wesentlichen übereinstimmt, so dass die Außenfläche (65') des ringförmigen Vorsprungs (65) mit dem zweiten mittleren Abschnitt (24) in Kontakt ist, um die Elastomerdichtung (60) in den Gewindering (20) axial einzuengen und radial zu blockieren.

7. Anschlussstück nach Anspruch 5, wobei der maximale Durchmesser (DE) des ringförmigen Vorsprungs (65) der Elastomerdichtung (60) wesentlich kleiner ist als der maximale Innendurchmesser (DG4) des zweiten mittleren Abschnitts (24) des Gewinderings (20), wobei das Anschlussstück ferner ein ringförmiges Abstandselement (70) enthält, das zwischen dem ersten mittleren Abschnitt (63) der Elastomerdichtung (60) und dem zweiten mittleren Abschnitt (24) des Gewinderings (20) angeordnet sein kann, wobei das ringförmige Abstandselement (70) mit dem ersten mittleren Abschnitt (63) und dem zweiten mittleren Abschnitt (24) in Kontakt ist, um die Elastomerdichtung (60) in den Gewindering (20) axial einzuengen und radial zu blockieren.

8. Anschlussstück nach einem oder mehreren der vorhergehenden Ansprüche, wobei die Elastomerdichtung (60) aus einem Elastomermaterial hergestellt ist, das derart ausgewählt wird, dass es das Rohr (P) beim Aufschrauben des Gewinderings (20) radial nicht verformt.

9. Anschlussstück nach einem oder mehreren der vorhergehenden Ansprüche, wobei jeder der Zähne (43) des Greifrings (40) ein Ende (44) aufweist, das sich von einer Endschlag-Ausgangsposition, in der es mit der Außenfläche (P1) des Rohrs (P) in Kontakt ist, und einer Endschlag-Endposition, in der es beim Aufschrauben des Gewinderings auf das Gewindeendelement (T) darin eingedrungen ist, bewegen kann.

10. Anschlussstück nach dem vorhergehenden Anspruch, wobei jeder der Zähne (43) eine derartige Form aufweist, dass das Ende (44) in der Endschlag-Ausgangsposition mit der Außenfläche (P1) des Rohrs (P) in einem im Wesentlichen punktförmigen Bereich davon in Kontakt kommen kann, um den lokalen Druck zu maximieren, wodurch das Eindringen der Zähne (43) erleichtert wird.

11. Anschlussstück nach Anspruch 9 oder 10, wobei die Elastomerdichtung (60) eine Form aufweist und/oder aus einen Material hergestellt ist, so dass den Enden (44) der Zähne (43) ein vorbestimmter Schlag verliehen wird.

12. Anschlussstück nach einem oder mehreren der vorhergehenden Ansprüche, wobei das Anschlussstück keinen inneren Metallkern aufweist, der in das Rohr einzufügen ist.

13. Anschlussstück nach einem oder mehreren der vorhergehenden Ansprüche, wobei der Greifring (40) in die Elastomerdichtung (60) eingebettet ist.

14. Anschlussstück nach einem oder mehreren der vorhergehenden Ansprüche, wobei das Endelement (T) einen vorderen Abschnitt (T2) enthält, der gegenüber dem Gewindering (20) angeordnet sein kann, wobei die Außenfläche (61') der Elastomerdichtung (60) einen vorderen Abschnitt (64) aufweist, der in Bezug auf den vorderen Abschnitt (T2) des Endelements (T) mindestens teilweise gegengeformt ist, um mit diesem (T2) beim Aufschrauben des Gewinderings (20) auf das Gewindeendelement (T) in Kontakt zu kommen, um die lokale hydraulische Dichtung bereitzustellen.

15. Anschlussstück nach einem oder mehreren der vorhergehenden Ansprüche, wobei der gezahnte Greifring (40) oder die Zähne (43) des gezahnten Greifrings (40) aus einem Material hergestellt sind, das eine Härte aufweist, die größer ist als die des Materials, aus dem die Oberfläche (P1) des Rohrs (P) hergestellt ist.

## Revendications

1. Raccord à vis pour la connexion réciproque d'un élément d'extrémité fileté (T) et d'un tuyau (P) à surface lisse pour le transport d'un gaz ou d'un liquide, comprenant:
- un écrou annulaire sensiblement tubulaire (20) définissant un axe (X) ayant une surface externe (21 ') susceptible d'être saisie par un utilisateur pour favoriser le vissage sur l'élément d'extrémité fileté (T);
- une bague de préhension (40)
- un joint d'étanchéité en élastomère (60) présentant une surface interne (61 ") susceptible d'entrer en contact avec la surface externe (P1) du tube (P) et une surface externe (61') susceptible d'entrer en contact avec l'extrémité filetée (T) pour fournir un joint hydraulique local, ledit joint élastomère (60) et ladite bague de préhension (40) étant couplés intégralement de manière à définir un joint de préhension unitaire (68) ;
dans lequel ledit écrou annulaire (20) a une première partie arrière (22) ayant une surface interne (22 ") divergeant sensiblement vers l'extérieur par rapport audit axe (X) susceptible d'interagir avec la surface extérieure (40') de ladite bague de préhension (40);
dans lequel lors du vissage dudit écrou annulaire (20) sur l'élément d'extrémité fileté (T), la translation axiale de ladite surface interne (22 ") de ladite première partie arrière (22) du même écrou annulaire (20) favorise la compression radiale de ladite bague de préhension (40) ;
dans lequel ladite bague de préhension (40) comporte une pluralité de dents (43) s'étendant dans un plan sensiblement transversal audit axe (x) pour pénétrer à l'intérieur de la surface extérieure (P1) du tuyau (P), ladite bague de préhension (40) étant une bague fendue ayant une découpe longitudinale (46) de manière à pouvoir être déformée élastiquement, de sorte que suite à ladite compression radiale lesdites dents (43) pénètrent au moins partiellement dans la surface extérieure (P1) du tuyau (P) pour assurer la prise mécanique locale ;
**caractérisé en ce que** la surface extérieure (40') de ladite bague de préhension (40) est configurée pour que lors du vissage dudit écrou annulaire (20) sur l'élément d'extrémité fileté (T) la première (40') et ladite surface interne (22 ") de ladite première partie arrière (22) dudit écrou annulaire (20) viennent réciproquement en contact dans un seul point de tangence (40"'), de manière à éviter une torsion indésirable du tuyau (P).

2. Raccord selon la revendication 1, dans laquelle ladite surface interne (22 ") de la première partie arrière (22) dudit écrou annulaire (20) est sensiblement tronconique, la surface extérieure (40 ') de ladite bague de préhension (40) ayant une zone de contact de forme arrondie (40"') avec ladite surface interne (22") dudit écrou annulaire (20), ladite zone de contact (40"') définissant ledit seul point de tangence.

3. Raccord selon la revendication 1 ou 2, dans laquelle ledit joint de préhension unitaire (68) est couplé audit écrou annulaire (20) de sorte que ces derniers définissent un ensemble unitaire à manipuler par un utilisateur.

4. Raccord selon la revendication 1, 2 ou 3, dans laquelle ledit joint élastomère (60) comporte une saillie annulaire (65), ledit écrou annulaire (20) comprenant un siège (25) pour ladite saillie annulaire (65) de manière à permettre un opérateur de pousser élastiquement ladite saillie annulaire (65) à l'intérieur dudit siège (25) de manière à obtenir ledit ensemble unitaire.

5. Raccord selon la revendication précédente, dans lequel ledit écrou annulaire (20) comporte une seconde partie centrale (24) et une troisième partie avant filetée (23), ladite seconde partie centrale (24) ayant un diamètre interne minimal (DG4) sensiblement supérieur au diamètre interne maximal (DG2) de ladite première partie arrière (22) et supérieur au diamètre de crête (DG3) de ladite troisième partie avant filetée (23) de manière à définir ledit siège (25).

6. Raccord selon la revendication précédente, dans lequel le diamètre maximal (DE) de ladite saillie annulaire (65) dudit joint élastomère (60) est légèrement supérieur ou sensiblement coïncident avec le diamètre interne maximal (DG4) de ladite seconde partie centrale (24).) dudit écrou annulaire (20) de sorte que la surface extérieure (65') de ladite saillie annulaire (65) est en contact avec ladite seconde partie centrale (24) pour contraindre axialement et bloquer radialement ledit joint élastomère (60) dans ledit écrou annulaire (20).

7. Raccord selon la revendication 5, dans laquelle le diamètre maximal (DE) de ladite saillie annulaire (65) dudit joint élastomère (60) est sensiblement inférieur au diamètre intérieur maximal (DG4) de ladite seconde portion centrale (24) dudit écrou annulaire (20), ledit raccord comprenant en outre un élément d'espacement annulaire (70) susceptible d'être interposé entre ladite première partie centrale (63) dudit joint élastomère (60) et ladite seconde partie centrale (24) dudit écrou annulaire (20), ledit élément d'espacement annulaire (70) étant en contact avec ladite première partie centrale (63) et ladite seconde partie centrale (24) pour contraindre axialement et bloquer radialement ledit joint élastomère (60) dans ledit écrou annulaire (20).

8. Raccord selon l'une ou plusieurs des revendications précédentes, dans lequel ledit joint élastomère (60) est fait d'un matériau élastomère choisi de telle manière qu'il ne déforme pas radialement le tuyau (P) lors du vissage dudit écrou annulaire (20) .

9. Raccord selon l'une ou plusieurs des revendications précédentes, dans lequel chacune desdites dents (43) de ladite bague de préhension (40) a une extrémité (44) susceptible de se déplacer depuis une position de fin de course de départ dans laquelle elle est en contact avec la surface extérieure (P1) du tuyau (P) et une position de fin de course finale dans laquelle elle pénètre lors du vissage dudit écrou annulaire dans l'élément d'extrémité filetée (T).

10. Raccord selon la revendication précédente, dans laquelle chacune desdites dents (43) a une forme telle que ladite extrémité (44) dans ladite position de fin de course de départ est susceptible de venir en contact avec la surface extérieure (P1) du tuyau (P) dans une zone sensiblement ponctuelle de celle-ci, de manière à maximiser la pression locale facilitant la pénétration desdites dents (43).

11. Raccord selon la revendication 9 ou 10, dans laquelle ledit joint élastomère (60) a une forme telle que et / ou est réalisé en un matériau de manière à conférer auxdites extrémités (44) desdites dents (43) une course prédéterminée.

12. Raccord selon l'une ou plusieurs des revendications précédentes, dans lequel le raccord est dépourvu d'un noyau métallique interne destiné à être inséré dans le tuyau.

13. Raccord selon l'une ou plusieurs des revendications précédentes, dans lequel ladite bague de préhension (40) est noyée dans ledit joint élastomère (60).

14. Raccord selon l'une ou plusieurs des revendications précédentes, dans lequel l'élément d'extrémité (T) comprend une partie avant (T2) susceptible d'être tournée vers l'écrou annulaire (20), la surface externe (61 ') dudit joint élastomère (60)) comprenant une partie avant (64) au moins partiellement contre-conformée par rapport à la partie avant (T2) de l'élément d'extrémité (T) pour entrer en contact avec celle-ci (T2) lors du vissage de l'écrou annulaire (20) sur l'élément d'extrémité filetée (T) pour assurer le joint hydraulique local.

15. Raccord selon l'une ou plusieurs des revendications précédentes, dans lequel la bague de préhension dentée (40) ou les dents (43) de ladite bague de préhension dentée (40) sont réalisées en un matériau ayant une dureté supérieure à celle du matériau dont la surface (P1) du tuyau (P) est réalisée.
